# EUROPEAN PATENT APPLICATION

(11) **EP 4 660 147 A1**
(43) Date of publication of application: **10.12.2025**
(21) Application number: 24750351.9
(22) Date of filing: 31.01.2024
(51) Int. Cl.: C01G 49/00, C09C 1/24, C09C 1/40, C09D 7/61, C09D 201/00

(54) **COMPOSITE IRON OXIDE PARTICLE POWDER, METHOD FOR PRODUCING SAME, AND COATING AND RESIN COMPOSITION USING SAID COMPOSITE IRON OXIDE PARTICLE POWDER**

(30) Priority: 01.02.2023 JP 2023013781
(71) Applicant: Toda Kogyo Corp., Hiroshima 732-0828 (JP)
(72) Inventor: YOKOTA, Masayuki, Otake-shi, Hiroshima 739-0652 (JP); WATANABE, Kozo, Otake-shi, Hiroshima 739-0652 (JP); UEMOTO, Shinji, Otake-shi, Hiroshima 739-0652 (JP)
(74) Representative: Mathys & Squire
(86) International application number: PCT/JP2024/003133
(87) International publication number: WO 2024/162402

(57) **Abstract**

The present disclosure provides an iron oxide pigment exhibiting a vivid red color, for example, suitable for coloring of paints, printing inks, plastics, films, ceramics, and cosmetics. The Al content of the composite iron oxide particles according to the present embodiment is 10 to 20 mol%. The composite iron oxide particle powder includes α-Fe₂O₃ containing Al in solid solution and α-Al₂O₃ containing Fe in solid solution. A BET specific surface area of the composite iron oxide particle powder is 5 to 20 m²/g. The composite iron oxide particle powder is obtained by washing and drying a mixture of aluminum-containing goethite and aluminum-containing magnetite, which is obtained by mixing a metal salt solution containing Fe²⁺ and Al³⁺ and an alkali solution at a temperature of 50°C or higher and oxidizing the mixture in an aqueous solution, and then firing the mixture in a temperature range of 700 to 1000°C.

## Description

### TECHNICAL FIELD

The present disclosure relates to a composite iron oxide particle powder.

### BACKGROUND ART

Hematite (α-Fe₂O₃) is widely known as a red iron oxide pigment because hematite exhibits a red color. This pigment has many applications such as coloring of paints, printing inks, plastics, films, ceramics, and cosmetics.

However, the red color of hematite is less vivid because it has a natural color tone. Therefore, an inorganic compound such as lead, an organic pigment, or the like is used for a vivid red color that we often see. Therefore, an iron oxide pigment exhibiting more vivid red color is required.

Conventionally, various studies on improvement of color of the iron oxide pigment have been made (Patent Literatures 1 to 4).

### CITATION LIST

### PATENT LITERATURE

Patent Literature 1: JP-A-2015-086126
Patent Literature 2: JP-T-2020-515686
Patent Literature 3: JP-A-2004-043208
Patent Literature 4: JP-A-H01-210466

### SUMMARY OF INVENTION

### PROBLEMS TO BE SOLVED BY INVENTION

As described above, some red pigments have been developed as red pigments that do not contain harmful elements and have excellent chroma. However, properties of these pigments are not necessarily sufficient. As a result, further improvement is required.

The chroma or tinting strength of the pigments disclosed in Patent Literatures 1 to 4 is insufficient.

An object of the present disclosure is to provide an iron oxide pigment having a vivid hue and excellent tinting strength.

### SOLUTION TO PROBLEMS

The object can be achieved by the composite iron oxide particle powder according to the present embodiment described below.

That is, the composite iron oxide particle powder according to the present embodiment contains 10 mol% to 20 mol% of Al and contains α-Fe₂O₃ containing Al in solid solution and α-Al₂O₃ containing Fe in solid solution.

In the composite iron oxide particle powder, a crystal lattice constant a of the α-Al₂O₃ may be 4.77 Å or more, and a crystal lattice constant c of the α-Al₂O₃ may be 13.05 Å or more.

In the composite iron oxide particle powder, a lattice constant a of α-Fe₂O₃ crystal may be 5.02 Å or less, and a lattice constant c may be 13.70 Å or less.

The composite iron oxide particle powder may have a specific surface area of 5 to 20 m²/g.

A method for producing the composite iron oxide particle powder according to the present embodiment includes: mixing a metal salt solution containing Fe²⁺ and Al³⁺ and an alkali solution at a temperature of 50°C or higher, and oxidizing the mixture in an aqueous solution to prepare a mixture of aluminum-containing goethite and aluminum-containing magnetite; and washing and drying the mixture, and then firing the mixture in a temperature range of 700 to 1000°C.

The paint according to the present embodiment contains the composite iron oxide particle powder according to the present embodiment.

A resin composition according to the present embodiment contains the composite iron oxide particle powder according to the present embodiment.

### EFFECTS OF INVENTION

The composite iron oxide particle powder according to the present embodiment has a vivid red color. Therefore, the composite iron oxide particle powder is suitable as a coloring material of various materials.

### BRIEF DESCRIPTION OF DRAWINGS

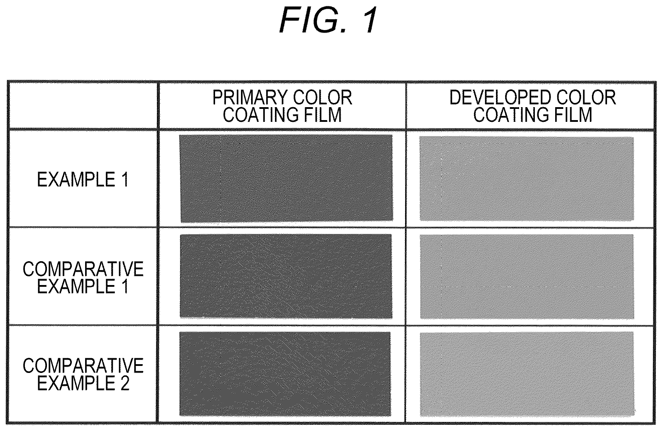

Fig. 1 is a photograph of paint films of Example 1, Comparative Example 1, and Comparative Example 2.

### DESCRIPTION OF EMBODIMENTS

Hereinafter, the present embodiment will be described in more detail.

First, a composite iron oxide particle powder according to the present embodiment will be described.

The Al content (Al/(Al+Fe)) of the composite iron oxide particle powder according to the present embodiment is 10 mol% to 20 mol%. When the Al content is less than 10 mol%, intensity (b*/a*) of yellowness with respect to redness decreases. When the Al content is more than 20 ml%, the redness (a*) decreases, and thus tinting strength decreases. Therefore, brightness (L*) of tint tone increases. At this time, the redness (a*) of the tint tone decreases, while the yellowness (b*) increases. Therefore, the color tone is different from a reddish color tone. The Al content is more preferably 12.5 mol% to 20 mol%.

In the composite iron oxide particle powder according to the present embodiment, α-Fe₂O₃ having a large amount of Al solid solution is composited with α-Al₂O₃ containing Fe in solid solution. Thus, intensity of the redness of α-Fe₂O₃ is maintained as it is. Furthermore, the composite iron oxide particle powder having a more yellowish and more vivid color tone than before is obtained.

That is, in the composite iron oxide particle powder according to the present embodiment, α-Al₂O₃ containing Fe in solid solution is complexed. Thus, the tinting strength of α-Al₂O₃ particles constituting the composite iron oxide particle powder is improved. Furthermore, even when the Al content of the composite iron oxide particle powder is high, it is possible to achieve high tinting strength.

A preferred crystal lattice constant a of α-Fe₂O₃ as a constituent component of the composite iron oxide particle powder according to the present embodiment is 5.02 Å or less. The crystal lattice constant c is preferably 13.70 Å or less. The composite iron oxide particle powder having a more vivid color tone can be obtained by controlling the crystal lattice constant a and the crystal lattice constant c of α-Fe₂O₃ within the above ranges. When the crystal lattice constant a and the crystal lattice constant c are out of the above ranges, the redness (a*) decreases. In addition, the BET specific surface area and the oil absorption amount also increase. Therefore, it is difficult to disperse the composite iron oxide particle powder in a vehicle. The crystal lattice constant a of α-Fe₂O₃ is more preferably 5.019 Å or less. The crystal lattice constant c is more preferably 13.69 Å or less. A lower limit value of the crystal lattice constant a is, for example, 5.01 Å. A lower limit value of the crystal lattice constant c is, for example, 13.67 Å.

A preferred crystal lattice constant a of α-Al₂O₃ as a constituent component of the composite iron oxide particle powder according to the present embodiment is 4.77 Å or more. The crystal lattice constant c is preferably 13.05 Å or more. The composite iron oxide particle powder having a more vivid color tone and good tinting strength can be obtained by controlling the crystal lattice constant a and the crystal lattice constant c of α-Al₂O₃ within the above ranges. When the crystal lattice constant a and the crystal lattice constant c are out of the above ranges, the brightness (L*) of the tint tone increases. In addition, the tinting strength decreases. At this time, the redness (a*) of the tint tone decreases, while the yellowness (b*) increases. Therefore, the color tone is different from a reddish color tone. An upper limit value of the crystal lattice constant a is, for example, 4.80 Å. An upper limit value of the crystal lattice constant c is, for example, 13.10 Å.

The BET specific surface area of the composite iron oxide particle powder according to the present embodiment is preferably 5 to 20 m²/g. When the BET specific surface area is less than 5 m²/g, since sintering occurs within and between the particles, the particles become coarse. As a result, the chroma decreases. On the other hand, when the BET specific surface area exceeds 20 m²/g, an intermolecular force increases due to miniaturization of the particles. As a result, aggregation easily occurs due to the increased intermolecular force. Therefore, it is difficult to uniformly coat particle surfaces with a surface treatment agent. It is also difficult to disperse the composite iron oxide particle powder in the vehicle. The BET specific surface area is preferably 5 to 15 m²/g.

In the composite iron oxide particle powder according to the present embodiment, an abundance ratio (α-Al₂O₃/α-Fe₂O₃) of α-Fe₂O₃ containing Al in solid solution and α-Al₂O₃ containing Fe in solid solution is preferably 0.001 to 0.176 in weight ratio. The abundance ratio is determined by X-ray diffraction/Rietveld analysis of the composite iron oxide particle powder. The abundance ratio is more preferably 0.001 to 0.111. When α-Fe₂O₃ containing Al in solid solution and α-Al₂O₃ containing Fe in solid solution are present within the above range, the composite iron oxide particle powder having a vivid color tone and good tinting strength can be obtained.

The composite iron oxide granular particle powder according to the present embodiment may inevitably contain impurities derived from various raw materials. However, the content of the impurities such as manganese, chromium, nickel, cobalt, and zinc is preferably reduced. These impurities are also harmful to a human body. Therefore, the content of the impurities is preferably as small as possible.

In the color tone of a mass tone paint film of the composite iron oxide particle powder according to the present embodiment, the redness (a*) is preferably 30 or more. When the redness (a*) is less than 30, the chroma decreases. In this case, the color tone is not vivid. The redness (a*) is more preferably 30.5 or more.

In the color tone of the mass tone paint film of the composite iron oxide particle powder according to the present embodiment, the yellowness (b*) to the redness (a*) ((b*/a*)) preferably satisfies a relationship of 0.83 ≤ (b*/a*) ≤ 1.1. When (b*/a*) < 0.83, the chroma decreases. In this case, the color tone is not vivid. When (b*/a*) > 1.1, the tinting strength decreases. A more preferable range of (b*/a*) is 0.85 ≤ (b*/a*) ≤ 1.05.

In the color tone of a tint tone paint film of the composite iron oxide particle powder according to the present embodiment, the brightness (L*) is preferably 61 or less. The brightness (L*) of the color tone of the tint tone paint film is an index for determining the tinting strength. In general, the smaller the index, the higher the tinting strength of the pigment. When the brightness (L*) exceeds 61, the tinting strength decreases. Therefore, such a composite iron oxide particle powder is not preferable as a pigment. The brightness (L*) is more preferably 60.5 or less.

In the color tone of the tint tone paint film of the composite iron oxide particle powder according to the present embodiment, the redness (a*) is preferably 28 or more. When the redness (a*) is less than 28, the tinting strength decreases. Therefore, such a composite iron oxide particle powder is not preferable as a pigment.

In the color tone of the tint tone paint film of the composite iron oxide particle powder according to the present embodiment, the yellowness (b*) to the redness (a*) ((b*/a*)) preferably satisfies a relationship of 0.70 ≤ (b*/a*) ≤ 1.1. When (b*/a*) < 0.70, the chroma decreases. In this case, the color tone is not vivid. When (b*/a*) > 1.1, the tinting strength decreases. At this time, the redness (a*) of the tint tone decreases, while the yellowness (b*) increases. Therefore, the color tone is different from a reddish color tone. A more preferable range of (b*/a*) is 0.75 ≤ (b*/a*) ≤ 1.05.

An average particle diameter of the composite iron oxide particle powder according to the present embodiment is preferably 0.05 to 0.3 µm. When the average particle diameter exceeds 0.3 µm, the tinting strength and the chroma decrease because of excessively large particle size. Such a composite iron oxide particle powder is not preferable as a pigment for coloring applications. When the average particle diameter is less than 0.05 µm, the tinting strength decreases. In addition, it may be difficult to disperse the composite iron oxide particle powder in the vehicle. The average particle diameter is more preferably 0.08 to 0.25 µm.

A shape of the particles of the composite iron oxide particle powder according to the present embodiment is preferably granular. In the case of particles having a large shape anisotropy such as a plate shape, a fiber shape, or a pipe shape, the color tone is unclear. A fine particle assembly (structure) or the like also causes structural destruction when the assembly is dispersed in the vehicle. As a result, the color tone is unclear. As described above, the large shape anisotropy of the particles and the fine particle assembly are not preferable.

A surface of the composite iron oxide particle powder according to the present embodiment can be coated using a compound or an organic surface treatment agent. The compound to be used is, for example, a compound containing one or more elements selected from Si, Al, Zr, Ti, Zn, and P.

Among examples of the compound containing one or more elements selected from Si, Al, Zr, Ti, Zn, and P, examples of aluminum compounds include aluminum salts such as aluminum acetate, aluminum sulfate, aluminum chloride, and aluminum nitrate, and alkali aluminates such as sodium aluminate. Examples of silicon compounds include No. 3 water glass, sodium orthosilicate, and sodium metasilicate. Examples of zirconium compounds that can be used include zirconium salts such as zirconium acetate, zirconium sulfate, zirconium chloride, and zirconium nitrate. Examples of titanium compounds that can be used include titanium salts such as titanium acetate, titanium sulfate, titanium chloride, and titanium nitrate. Examples of zinc compounds that can be used include zinc salts such as zinc acetate, zinc sulfate, zinc chloride, and zinc nitrate. Examples of phosphorus compounds that can be used include phosphates such as sodium hydrogen phosphate, sodium ammonium hydrogen phosphate, potassium phosphate, sodium polyphosphate, and sodium hexametaphosphate.

Examples of the organic surface treatment agent include: higher fatty acids such as stearic acid, stearate, and rosin; organic silicon compounds such as alkoxysilanes, fluoroalkylsilanes, silane-based coupling agents, and organopolysiloxanes; titanate-based coupling agents, aluminate-based coupling agents, zirconate-based coupling agents, low molecular surfactants, polymeric surfactants, and phosphoric acid compounds.

Specific examples of the organic silicon compound include: alkoxysilanes such as methyltriethoxysilane, dimethyldiethoxysilane, phenyltriethoxysilane, diphenyldiethoxysilane, methyltrimethoxysilane, dimethyldimethoxysilane, phenyltrimethoxysilane, diphenyldimethoxysilane, ethyltriethoxysilane, propyltriethoxysilane, butyltriethoxysilane, isobutyltrimethoxysilane, hexyltriethoxysilane, octyltriethoxysilane, and decyltriethoxysilane; fluoroalkylsilanes such as trifluoropropyltrimethoxysilane, tridecafluorooctyltrimethoxysilane, heptadecafluorodecyltrimethoxysilane, tolfluoropropyltriethoxysilane, heptadecafluorodecyltriethoxysilane, and tridecafluorooctyltriethoxysilane; silane-based coupling agents such as vinyltrimethoxysilane, vinyltriethoxysilane, γ-aminopropyltriethoxysilane, γ-glycidoxypropyltrimethoxysilane, γ-mercaptopropyltrimethoxysilane, γ-methacryloyloxypropyltrimethoxysilane, N-(β-aminoethyl)-γ-aminopropyltrimethoxysilane, γ-glycidoxypropylmethyldimethoxysilane, and γ-chloropropyltrimethoxysilane; and organopolysiloxanes such as polysiloxane, methylhydrogenpolysiloxane, and modified polysiloxane.

Examples of the titanate-based coupling agents include isopropyl tristearoyl titanate, isopropyl tris(dioctyl pyrophosphate)titanate, isopropyl tri(N-aminoethyl-aminoethyl)titanate, tetraoctyl bis(ditridecyl phosphate)titanate, tetra(2-2-diallyloxymethyl-1-butyl)bis(ditridecyl)phosphate titanate, bis(dioctyl pyrophosphate)oxyacetate titanate, and bis(dioctyl pyrophosphate)ethylene titanate.

Examples of the aluminate-based coupling agents include acetoalkoxyaluminum diisopropylate, aluminum diisopropoxymonoethylacetoacetate, aluminum trisethylacetoacetate, and aluminum trisacetylacetonate.

Examples of the zirconate-based coupling agents include zirconium tetrakis acetylacetonate, zirconium dibutoxy bis(acetylacetonate), zirconium tetrakis ethyl acetoacetate, zirconium tributoxy monoethyl acetoacetate, and zirconium tributoxy acetylacetonate.

Examples of the low molecular surfactants include alkylbenzene sulfonates, dioctylsulfone succinates, alkylamine acetates, and alkyl fatty acid salts. Examples of the polymeric surfactants include polyvinyl alcohol, polyacrylate, carboxymethyl cellulose, acrylic acid-maleate copolymer, and olefin-maleate copolymer.

Examples of the phosphoric acid compounds include an organic phosphorus compound such as a phosphoric acid ester, a phosphorous acid ester, an acidic phosphoric acid ester, and a phosphonic acid.

A coating amount of the compound or the organic surface treatment agent is preferably 0.1 to 40 wt% with respect to the composite iron oxide particle powder.

Next, a method for producing the composite iron oxide particle powder according to the present embodiment will be described.

In order to obtain the composite iron oxide particle powder according to the present embodiment, first, a metal salt solution containing Fe²⁺ and Al³⁺ and an alkali solution are mixed at a temperature of 50°C or higher. The resulting mixture is oxidized in an aqueous solution. A mixture of aluminum-containing goethite and aluminum-containing magnetite thus obtained is washed and dried. Subsequently, the dried mixture is fired in a temperature range of 700 to 1000°C.

In preparation of the mixture of the aluminum-containing goethite and the aluminum-containing magnetite used in the present embodiment, a ferrous salt aqueous solution, an aluminum salt aqueous solution, and an aqueous alkali solution are used. These aqueous solutions are neutralized within a range of pH 4.0 to 8.0, and then aerated with a gas containing an oxidizing gas such as air. Thus, the compound is oxidized in the aqueous solution to obtain a desired mixture.

Examples of the ferrous salt aqueous solution that can be used in the present embodiment include an aqueous ferrous sulfate solution and an aqueous ferrous chloride solution.

Examples of the aluminum salt aqueous solution that can be used in the present embodiment include an aluminum sulfate aqueous solution and an aluminum chloride aqueous solution.

Examples of the aqueous alkali solution that can be used in the present embodiment include an aqueous sodium hydroxide solution and an aqueous potassium hydroxide solution.

A ratio of the ferrous salt aqueous solution and the aluminum salt aqueous solution used in the preparation of the mixture of the aluminum-containing goethite and the aluminum-containing magnetite used in the present embodiment is 80 to 90 mol% in terms of Fe²⁺ in the ferrous salt aqueous solution and 10 to 20 mol% in terms of Al in the aluminum salt aqueous solution.

When the ratio of the ferrous salt aqueous solution is less than 80 mol% in terms of Fe²⁺, a time required for an oxidation reaction is long, which is not economical.

When pH of a mixed aqueous solution used in the present embodiment is less than 4.0, it is difficult to obtain a target ratio between Fe²⁺ and Al³⁺. As a result, unreacted Al³⁺ remains in the mixed aqueous solution, which is not economical. In consideration of the particle shape and the particle size, a preferred pH is 4.0 to 8.0. A preferable reaction temperature is 50°C or higher. The lower the reaction temperature, the longer the time required for the oxidation reaction, which is not economical. Similarly, the lower the reaction temperature, the smaller the particle size. Therefore, it is easy to obtain a composite iron oxide powder having a large shape anisotropy during heat treatment. As a result, it is difficult to obtain the composite iron oxide particle powder having a vivid color tone.

The pH during aqueous solution reaction can be adjusted with a sodium hydroxide solution, a dilute sulfuric acid solution, or the like.

The mixture of the aluminum-containing goethite and the aluminum-containing magnetite obtained by the oxidation reaction in the aqueous solution used in the present embodiment can be separated by filtration, washed with water, and then dried.

The BET specific surface area of the mixture of the aluminum-containing goethite and the aluminum-containing magnetite obtained by the oxidation reaction in the aqueous solution used in the present embodiment is preferably 40 to 100 m²/g.

The composite iron oxide particle powder according to the present embodiment is obtained by heat-treating a mixed powder of the aluminum-containing goethite and the aluminum-containing magnetite in the air at a temperature range of 700 to 1000°C. When the heat treatment temperature is lower than 700°C, solid solution of aluminum in hematite particles does not proceed sufficiently. Similarly, solid solution of iron in alumina particles is also not sufficient. Therefore, composite oxide particles lacking the redness (a*) are generated. When the heat treatment temperature exceeds 1000°C, coarse particles are generated by particle growth or thermal sintering. Therefore, it is difficult to obtain desired composite oxide particles having a vivid red-yellow-based color tone.

A particle surface of the composite iron oxide particle powder according to the present embodiment may be coated with the compound containing one or more elements selected from Si, Al, Zr, Ti, Zn, and P by surface treatment. The surface treatment can be performed according to a conventional method such as a wet or dry method. For example, examples of the wet method include a method of coating the surface of the particles by adding and mixing a soluble compound containing one or more elements selected from Si, Al, and Zr to a wet-dispersed slurry of the composite iron oxide particle powder while adjusting the pH with an acid or an alkali. Examples of the dry method include a method of coating the composite iron oxide particle powder with, for example, a coupling agent containing one or more elements selected from Si, Al, and Zr in an apparatus such as a Henschel mixer.

In the dry method, an apparatus capable of applying a shearing force to a powder layer is preferable as an equipment used for mixing and stirring. Preferably, an apparatus capable of simultaneously performing shearing, spatula stroking, and compression is used. Examples thereof include a wheel type kneader, a ball type kneader, a blade type kneader, and a roll type kneader. The wheel type kneader can be used more effectively.

Examples of the wheel type kneader include an edge runner (synonymous with "mix muller", "Simpson mill", or "Sandoz mill"), a multimul, a Stotz mill, a wet pan mill, a coner mill, and a ring muller. Preferably, the edge runner, the multimul, the Stotz mill, the wet pan mill, or the ring muller is used. More preferably, the edge runner is used. Examples of the ball type kneader include a vibration mill. Examples of the blade type kneader include the Henschel mixer, a planetary mixer, and a Nauta mixer. Examples of the roll type kneader include an extruder.

As the equipment used for mixing and stirring the composite iron oxide particle powder and the surface treatment agent, the apparatus capable of applying the shearing force to the powder layer is preferable. Preferably, an apparatus capable of simultaneously performing shearing, spatula stroking, and compression is used. Examples thereof include a wheel type kneader, a ball type kneader, a blade type kneader, and a roll type kneader. The wheel type kneader can be used more effectively.

Examples of the wheel type kneader include an edge runner (synonymous with "mix muller", "Simpson mill", or "Sandoz mill"), a multimul, a Stotz mill, a wet pan mill, a coner mill, and a ring muller. Preferably, the edge runner, the multimul, the Stotz mill, the wet pan mill, or the ring muller is used. More preferably, the edge runner is used. Examples of the ball type kneader include a vibration mill. Examples of the blade type kneader include the Henschel mixer, a planetary mixer, and a Nauta mixer. Examples of the roll type kneader include an extruder.

Next, a paint blended with the composite iron oxide particle powder according to the present embodiment will be described.

In the paint according to the present embodiment, the composite iron oxide particle powder can be used at a blending ratio in a range of 0.5 to 100 parts by weight with respect to 100 parts by weight of a paint constituent substrate. In consideration of handleability of the paint, the blending ratio is preferably 1.0 to 100 parts by weight.

Examples of the paint constituent substrate to be blended include a resin and a solvent. If necessary, for example, fats and oils, an antifoaming agent, an extender pigment, a drying accelerator, a surfactant, a curing accelerator, or an auxiliary may be blended.

Examples of resins that can be used include acrylic resins, alkyd resins, polyester resins, polyurethane resins, epoxy resins, phenol resins, melamine resins, amino resins, vinyl chloride resins, silicone resins, rosin-based resins such as gum rosin and lime rosin, maleic acid resins, polyamide resins, nitrocellulose, ethylene-vinyl acetate copolymer resins, rosin-modified resins such as rosin-modified phenolic resins and rosin-modified maleic acid resins, petroleum resins, and fluororesins. Examples of resins for water-based paints that can be used include water-soluble acrylic resins, water-soluble styrene-maleic acid resins, water-soluble alkyd resins, water-soluble melamine resins, water-soluble urethane emulsion resins, water-soluble epoxy resins, water-soluble polyester resins, and water-soluble fluororesins, which are usually used for water-based paints or aqueous inks. These resins are usually used for solvent-based paints or oily printing inks.

Examples of the solvent that can be used include: soybean oil, toluene, xylene, thinner, butyl acetate, methyl acetate, methyl isobutyl ketone, methyl cellosolve, ethyl cellosolve, propyl cellosolve, and butyl cellosolve; glycol ether-based solvents such as propylene glycol monomethyl ether; ester-based solvents such as ethyl acetate, butyl acetate, and amyl acetate; aliphatic hydrocarbon-based solvents such as hexane, heptane, and octane; alicyclic hydrocarbon-based solvents such as cyclohexane; petroleum-based solvents such as mineral spirits; ketone-based solvents such as acetone and methyl ethyl ketone; alcohol-based solvents such as methyl alcohol, ethyl alcohol, propyl alcohol, and butyl alcohol; and aliphatic hydrocarbons. These solvents are usually used for the solvent-based paints.

As a solvent for water-based paints, a mixture of water and a water-soluble organic solvent usually used for water-based paints can be used. Examples of the water-soluble organic solvent include: alcohol-based solvents such as ethyl alcohol, propyl alcohol, and butyl alcohol; glycol ether-based solvents such as methyl cellosolve, ethyl cellosolve, propyl cellosolve, and butyl cellosolve; oxyethylene-added polymers or oxypropylene-added polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; glycerin; and 2-pyrrolidone.

Examples of the fats and oils that can be used include boiled oil prepared by treating a drying oil such as linseed oil, tung oil, oiticica oil, and safflower oil.

Examples of commercially available antifoaming agents that can be used include NOPCO 8034 (trade name), SN-DEFOAMER 477 (trade name), SN-DEFOAMER 5013 (trade name), SN-DEFOAMER 247 (trade name), and SN-DEFOAMER 382 (trade name) (all of the above are manufactured by SAN NOPCO LIMITED); and ANTI-FOAM 08 (trade name), and EMULGEN 903 (trade name) (all of the above are manufactured by Kao Corporation).

Next, the method for producing the composite iron oxide particle powder according to the present embodiment will be described.

In the resin composition according to the present embodiment, the composite iron oxide particle powder can be used at a blending ratio in a range of 0.01 to 200 parts by weight with respect to 100 parts by weight of the resin. In consideration of handleability of the resin composition, the blending ratio is preferably 0.05 to 150 parts by weight, and more preferably 0.1 to 100 parts by weight.

Examples of the constituent substrate blended in the resin composition according to the present embodiment include the composite iron oxide particle powder and a well-known thermoplastic resin. At the same time, additives such as a lubricant, a plasticizer, an antioxidant, an ultraviolet absorber, and various stabilizers may be blended as necessary.

Examples of the resins that can be used include polyolefins such as polyethylene, polypropylene, polybutene, and polyisobutylene, thermoplastic resins such as polyvinyl chloride, polymethylpentene, polyethylene terephthalate, polybutylene terephthalate, polystyrene, styrene-acrylic acid ester copolymers, styrene-vinyl acetate copolymers, acrylonitrile-butadiene-styrene copolymers, acrylonitrile-EPDM-styrene copolymers, acrylic resins, polyamides, polycarbonates, polyacetals, and polyurethanes, rosin-modified maleic acid resins, phenol resins, epoxy resins, polyester resins, silicone resins, rosin esters, rosin, natural rubber, and synthetic rubber.

An amount of the additive is preferably 50 wt% or less with respect to a total amount of the composite iron oxide particle powder and the resin. When the content of the additive is more than 50 wt%, moldability may be deteriorated.

In preparation of the resin composition according to the present embodiment, a strong shearing action is applied to a resin raw material mixed well in advance and the composite iron oxide particle powder under heating using a kneader or an extruder. In this way, an aggregate of hematite particle powder is broken. As a result, the composite iron oxide particle powder can be uniformly dispersed in the resin composition. Thereafter, the obtained resin composition is molded into a shape according to a purpose and used in the subsequent steps.

The resin composition according to the present embodiment can also be prepared via a master batch pellet.

In production of the master batch pellet used in the present embodiment, first, a binder resin and the hematite particle powder as the constituent substrate of the paint and the resin composition are mixed by a mixer such as a ribbon blender, the Nauta mixer, the Henschel mixer, or a super mixer as necessary. Thereafter, the obtained mixture is kneaded and molded by a known single screw kneading extruder, twin-screw kneading extruder, or the like, and then cut. Alternatively, the mixture is kneaded by, for example, a Banbury mixer or a pressure kneader. A kneaded product thus obtained is pulverized or molded, and then cut.

When the binder resin and the composite iron oxide particle powder are supplied to the kneader, each of the resin and the powder may be individually and quantitatively supplied at a predetermined ratio. Alternatively, a mixture of both may be supplied.

The master batch pellet used in the present embodiment can be molded into various shapes. For example, the master batch pellet having an indefinite shape, a spherical shape, a cylindrical shape, or a flake shape can be manufactured.

An average major diameter of the master batch pellet used in the present embodiment is in a range of 1 to 6 mm, preferably 2 to 5 mm. An average minor diameter of the master batch pellet is 2 to 5 mm, preferably 2.5 to 4 mm. The average major diameter of less than 1 mm is not preferable because workability at the time of pellet production is deteriorated. When the average major diameter exceeds 6 mm, a difference between a size of the master batch pellet and a size of the binder resin for dilution increases. Therefore, it is difficult to sufficiently disperse the master batch pellet.

As the binder resin blended in the master batch pellet used in the present embodiment, the same resin as a resin for the resin composition can be used.

Composition of the binder resin in the master batch pellet may be the same as that of the binder resin for dilution. Alternatively, resins having different compositions may be used. However, when the resins having different compositions are used, the binder resin is preferably selected in consideration of various characteristics determined by compatibility between the resins.

The amount of the composite iron oxide particle powder blended in the master batch pellet is 1 to 200 parts by weight, preferably 1 to 150 parts by weight, and more preferably 1 to 100 parts by weight with respect to 100 parts by weight of the binder resin. When the amount of the composite iron oxide particle powder is less than 1 part by weight, melt viscosity at the time of kneading is insufficient. Therefore, it is difficult to disperse and mix the iron oxide particle powder well. When the amount of the composite iron oxide particle powder is more than 200 parts by weight, an amount of the binder resin to an amount of the iron oxide particle powder is small. Therefore, it is difficult to disperse and mix the iron oxide particle powder well. In addition, a slight change in addition amount of the master batch pellet greatly changes the content of the iron oxide particle powder blended in the resin composition. Therefore, it is difficult to prepare a resin composition having a desired content, which is not preferable. In addition, since mechanical wear is severe, the amount of the composite iron oxide particle powder exceeding 200 parts by weight is not appropriate.

### EXAMPLES

Representative examples of the present disclosure are as follows.

The BET specific surface area of the composite iron oxide particle powder was calculated by a BET method using "Multisorb 16" (manufactured by Quantachrome Instruments, Inc.).

The content of metal elements in the composite iron oxide particle powder was measured in accordance with the "General rules for X-ray fluorescence analysis" of JIS K 0119 using "X-ray Fluorescence Analyzer ZSX Primus II" (manufactured by Rigaku Industrial Corporation).

In preparation of the mass tone paint film of the composite iron oxide particle powder, first, 0.5 g of the powder and 0.5 ml of castor oil were kneaded using "Automatic Hoover Muller H3" (manufactured by Toyo Seiki Co., Ltd.). The resulting paste was mixed with 4.5 g of lacquer resin. The mixed paste and lacquer resin were applied to a cast coated paper using a 6mil applicator and then allowed to dry at room temperature. Kneading by Automatic Hoover Muller was performed under conditions of a load of 2.5 kg and 50 rotations×2. The rotation speed was set to 100 rpm.

In preparation of the tint tone paint film of the composite iron oxide particle powder according to the present embodiment, 0.5 g of powder, 1.5 g of titanium oxide powder, and 1.5 ml of castor oil were kneaded using "Automatic Hoover Muller H3" (manufactured by Toyo Seiki Co., Ltd.). The resulting paste was mixed with 4.5 g of lacquer resin. The mixed paste and lacquer resin were applied to a cast coated paper using a 6mil applicator and then allowed to dry at room temperature. Kneading by Automatic Hoover Muller was performed under conditions of a load of 2.5 kg and 50 rotations×2. The rotation speed was set to 100 rpm.

In measurement of L*, a*, and b* of the mass tone paint film and measurement of L*, a*, and b* of the tint tone paint film of the paint according to the present embodiment, a "spectrophotometric colorimeter SPECTROPHOTOMETER CM-3610A" (manufactured by Konica Minolta, Inc.) was used. Measurement geometry was set in accordance with JIS Z 8722 conditions c, CIE No. 15 (2004), ISO 7724/1, DIN 5033 Teil7, ASTM E1164. Colorimetric parameters L*, a*, b* were calculated for a light source D65.

A crystal structure and crystal lattice constant of the composite iron oxide particle powder were determined by Rietveld analysis using an X-ray diffractometer D8 ADVANCE (manufactured by Bruker Corporation). When it was observed that the crystal lattice constant of a sample was larger than the crystal lattice constant (a: 4.759 Å, c: 12.991 Å) of α-Al₂O₃, it was determined that Fe was in solid solution in α-Al₂O₃.

In addition, when it was observed that the crystal lattice constant of the sample was smaller than the crystal lattice constant (a: 5.035 Å, c: 13.750 Å) of α-Fe₂O₃, it was determined that Al was in solid solution in α-Fe₂O₃.

### Example 1

45 L of a solution containing 42.5 mol of ferrous sulfate and 3.75 mol of aluminum sulfate was charged into a mechanically stirred air oxidation reactor having an internal capacity of 50 L. While stirring with a stirrer, a temperature inside the reactor was raised to 70°C. Subsequently, using a sodium hydroxide solution, while pH of a reaction solution in the reactor was adjusted to 5.7, the reaction solution was aerated with air. In this way, an air oxidation reaction was carried out for 6 hours. The obtained reaction product was washed with ion-exchanged water and dried at 60°C.

Composition of the powder after drying was analyzed by X-ray diffraction measurement, specific surface area measurement, and fluorescent X-ray. As a result, the aluminum content of the obtained powder was 14.2 mol%. The BET specific surface area was 62 m²/g. In addition, it was confirmed that the obtained powder was the mixture of the aluminum-containing goethite and the aluminum-containing magnetite.

Subsequently, the obtained dry powder was put into a crucible made of alumina, and fired at 850°C for 1 hour in a box-type muffle furnace in an air atmosphere. In this way, the composite iron oxide particle powder was obtained. A fired powder was pulverized by an atomizer (impact mill). Composition of the pulverized powder was analyzed by X-ray diffraction measurement, specific surface area measurement, and fluorescent X-ray.

As a result, the aluminum content of the obtained fired powder was 14.2 mol%. The BET specific surface area was 9.7 m²/g. From the crystal structure, it was confirmed that the obtained fired powder was a composite iron oxide powder of α-Fe₂O₃ (crystal lattice constant a: 5.015 Å, crystal lattice constant c: 13.681 Å) and α-Al₂O₃ (crystal lattice constant a: 4.780 Å, crystal lattice constant c: 13.081 Å). The crystal lattice constant of the α-Fe₂O₃ is smaller than that of original α-Fe₂O₃. Therefore, it was determined that Al was in solid solution in α-Fe₂O₃. The crystal lattice constant of the α-Al₂O₃ is larger than that of original α-Al₂O₃. Therefore, it was determined that Fe was in solid solution in α-Al₂O₃. The abundance ratio (α-Al₂O₃/α-Fe₂O₃) of the composite iron oxide powder was 0.033.

Further, a mass tone paint film and a tint tone paint film of the obtained powder were prepared. Then, a* and b* of the mass tone paint film and L*, a*, and b* of the tint tone paint film were measured. As a result, measured values of mass tone a* = 31.6, mass tone (b*/a*) = 0.89, tint tone L* = 58.9, tint tone a* = 29.1, and tint tone (b*/a*) = 0.81 were obtained.

### Example 2

A composite iron oxide particle powder was obtained by the same method as in Example 1 except that a raw material ratio between Al and Fe were changed.

### Comparative Example 1

25 L of a solution containing 31.62 mol of ferrous sulfate (special grade reagent manufactured by KOGA Chemical Mfg Co.,Ltd.), 2.79 mol of ferric sulfate, and 2.8 mol of aluminum sulfate was prepared as the metal salt solution. Subsequently, 25 L of a solution containing 88.58 mol of sodium hydroxide was put into a mechanically stirred air oxidation reactor having an internal capacity of 50 L. While the solution was stirred with a stirrer, a temperature of the solution was raised to 90°C. An adjusted metal salt solution was charged into the reactor over 45 minutes while passing nitrogen into the reactor. After formation of precipitates, the oxidation reaction was carried out for 8 hours while passing air. The obtained reaction product was washed with ion-exchanged water and then dried at 60°C.

The composition of the powder after drying was analyzed by X-ray diffraction measurement, specific surface area measurement, and fluorescent X-ray. As a result, it was confirmed that the obtained powder was aluminum-containing magnetite having an aluminum content of 7.0 mol% and a BET specific surface area of 36 m²/g.

Subsequently, the obtained dry powder was put into a crucible made of alumina, and fired at 775°C for 1 hour in a box-type muffle furnace in an air atmosphere. In this way, the iron oxide particle powder was obtained. A fired powder was pulverized by an atomizer (impact mill). The composition of the pulverized powder was analyzed by X-ray diffraction measurement, specific surface area measurement, and fluorescent X-ray.

As a result, the aluminum content of the obtained fired powder was 7.0 mol%. The BET specific surface area was 6.2 m²/g. From the crystal structure, the obtained fired powder was confirmed to be an α-Fe₂O₃ (crystal lattice constant a: 5.024 Å, crystal lattice constant c: 13.713 Å) single phase.

Further, a mass tone paint film and a tint tone paint film of the obtained fired powder were prepared. Then, L*, a*, and b* of the mass tone paint film and the tint tone paint film were measured. As a result, measured values of mass tone a* = 32.0, mass tone (b*/a*) = 0.81, tint tone L* = 60.0, tint tone a* = 27.5, and tint tone (b*/a*) = 0.69 were obtained.

### Comparative Example 2

30 L of a solution containing 1.485 mol of sodium carbonate and 33.3 mol of sodium hydroxide was charged into a mechanically stirred air oxidation reactor having an internal capacity of 50 L. Subsequently, 15 L of a solution containing 12 mol of ferrous sulfate and 1.5 mol of aluminum sulfate was charged into the reactor. Thereafter, the contents of the reactor were stirred with a stirrer. Subsequently, the pH of the mixed solution was adjusted to 9.3 and 25°C using a sodium hydroxide solution. Then, air oxidation was performed for 2 hours by passing air while stirring with a stirrer. The obtained reaction product was washed with ion-exchanged water and then dried at 60°C.

Composition of the powder after drying was analyzed by X-ray diffraction measurement, specific surface area measurement, and fluorescent X-ray. As a result, it was confirmed that the obtained powder was aluminum-containing goethite having an aluminum content of 20.4 mol% and a BET specific surface area of 205 m²/g.

Subsequently, the obtained dry powder was put into a crucible made of alumina, and fired at 850°C for 1 hour in a box-type muffle furnace in an air atmosphere. In this way, an Al-containing iron oxide particle powder was obtained. The fired powder was wet-pulverized with a zirconia ball mill. The pulverized powder was washed with ion-exchanged water and then dried at 60°C. Composition of a dried powder was analyzed by X-ray diffraction measurement, specific surface area measurement, and fluorescent X-ray.

As a result, the aluminum content of the obtained powder was 20.2 mol%. The BET specific surface area was 18.2 m²/g. From the crystal structure, it was confirmed that the obtained powder was a composite iron oxide powder of α-Fe₂O₃ (crystal lattice constant a: 5.014 Å, crystal lattice constant c: 13.676 Å) and α-Al₂O₃ (crystal lattice constant a: 4.787 Å, crystal lattice constant c: 13.092 Å). The abundance ratio (α-Al₂O₃/α-Fe₂O₃) of the composite iron oxide powder was 0.092.

Further, a mass tone paint film and a tint tone paint film of the obtained powder were prepared. Then, L*, a*, and b* of the mass tone paint film and the tint tone paint film were measured. As a result, measured values of mass tone a* = 26.2, mass tone (b*/a*) = 1.13, tint tone L* = 61.9, tint tone a* = 26.1, and tint tone (b*/a*) = 1.13 were obtained.

### Comparative Example 3

An Al-containing iron oxide particle powder was prepared by the same method as in Comparative Example 2 except that the mixing ratio between Al and Fe was changed.

Various properties of the Al-containing iron oxide particle powder obtained at this time are shown in Tables 1 to 3.

**[Table 1]**

| | **Precursor before firing** | | |
|---|---|---|---|
| | **Al/(Fe+Al) mol%** | **BET specific surface area m²/g** | **Crystal structure** |
| **Example 1** | **14.2** | **62** | **α-FeOOH, Fe₃O₄** |
| **Example 2** | **19.7** | **76** | **α-FeOOH, Fe₃O₄** |
| **Comparative Example 1** | **7.0** | **36** | **Fe₃O₄** |
| **Comparative Example 2** | **20.2** | **205** | **α-FeOOH** |
| **Comparative Example 3** | **30.2** | **238** | **α-FeOOH** |

**[Table 2]**

| | **Powder properties of composite iron oxide particle powder** | | | | | | | |
|---|---|---|---|---|---|---|---|---|
| | **Al/(Fe+Al) mol%** | **BET specific surface area m²/g** | **Crystal structure** | **α-Fe₂O₃** | | **α-Al₂O₃** | | **α-Al₂O₃/α-Fe₂O₃** |
| | | | | **Lattice constant a Å** | **Lattice constant c Å** | **Lattice constant a Å** | **Lattice constant c Å** | |
| | | | - | | | | | - |
| **Example 1** | **14.2** | **9.7** | **α-Fe₂O₃, α-Al₂O₃** | **5.015** | **13.681** | **4.780** | **13.081** | **0.033** |
| **Example 2** | **19.7** | **12.7** | **α-Fe₂O₃, α-Al₂O₃** | **5.014** | **13.678** | **4.780** | **13.082** | **0.084** |
| **Comparative Example 1** | **7** | **6.2** | **α-Fe₂O₃** | **5.024** | **13.713** | **-** | **-** | **0.000** |
| **Comparative Example 2** | **20.2** | **18.2** | **α-Fe₂O₃, α-Al₂O₃** | **5.015** | **13.679** | **4.787** | **13.092** | **0.092** |
| **Comparative Example 3** | **30.2** | **23.4** | **α-Fe₂O₃, α-Al₂O₃** | **5.015** | **13.679** | **4.791** | **13.081** | **0.191** |

**[Table 3]**

| | **Mass tone paint film** | | **Tint tone paint film** | | |
|---|---|---|---|---|---|
| | **a*** | **b*/a*** | **L*** | **a*** | **b*/a*** |
| **Example 1** | **31.6** | **0.89** | **58.9** | **29.1** | **0.81** |
| **Example 2** | **31.0** | **0.94** | **60.0** | **29.1** | **0.90** |
| **Comparative Example 1** | **32.0** | **0.81** | **60.0** | **27.5** | **0.69** |
| **Comparative Example 2** | **26.2** | **1.13** | **61.9** | **26.1** | **1.13** |
| **Comparative Example 3** | **25.8** | **1.20** | **62.0** | **27.1** | **1.20** |

Fig. 1 illustrates photographs of paint films in mass tones and photographs of paint films in tint tones taken using paint films prepared from composite iron oxide particle powders obtained in Example 1, Comparative Example 1, and Comparative Example 2. It was confirmed that the paint film of Example 1 was more vivid than the paint film of Comparative Example 1 because of strong yellowness. In addition, it was confirmed that the paint film of Example 1 was brighter and more vivid than the paint film of Comparative Example 2, in mass tones. Furthermore, in the case of the tint tone, it was confirmed that the paint film of Example 1 had a higher tinting strength due to stronger redness than the paint film of Comparative Example 2.

### INDUSTRIAL APPLICABILITY

The iron oxide particle powder according to the present embodiment exhibits a vivid red color. Therefore, this iron oxide particle powder is, for example, suitable for coloring of paints, printing inks, plastics, films, ceramics, and cosmetics.

## Claims

1. A composite iron oxide particle powder comprising 10 mol% to 20 mol% of Al and comprising α-Fe₂O₃ containing Al in solid solution and α-Al₂O₃ containing Fe in solid solution.

2. The composite iron oxide particle powder according to claim 1, wherein
a crystal lattice constant a of the α-Al₂O₃ is 4.77 Å or more, and
a crystal lattice constant c of the α-Al₂O₃ is 13.05 Å or more.

3. The composite iron oxide particle powder according to claim 1, wherein
a crystal lattice constant a of the α-Fe₂O₃ is 5.02 Å or less, and
a crystal lattice constant c of the α-Fe₂O₃ is 13.70 Å or less.

4. The composite iron oxide particle powder according to claim 1, having a specific surface area of 5 to 20 m²/g.

5. A method for producing the composite iron oxide particle powder according to claim 1, the method comprising:
mixing a metal salt solution containing Fe²⁺ and Al³⁺ and an alkali solution at a temperature of 50°C or higher, and oxidizing a mixture in an aqueous solution to prepare a mixture of aluminum-containing goethite and aluminum-containing magnetite; and
washing and drying the mixture, and then firing the mixture in a temperature range of 700 to 1000°C.

6. A paint comprising the composite iron oxide particle powder according to claim 1.

7. A resin composition comprising the composite iron oxide particle powder according to claim 1.
